# FASCICULE DE BREVET EUROPEEN

(11) **EP 2 166 629 B1**
(45) Date de publication et mention de la délivrance du brevet: **04.05.2011**
(21) Numéro de dépôt: 09170747.1
(22) Date de dépôt: 18.09.2009
(51) Int. Cl.: H02B 1/20

(54) **Dispositif de répartition de puissance électrique**
Vorrichtung zur Aufteilung elektrischer Leistung
Device for distributing electric power

(30) Priorité: 22.09.2008 FR 0856362
(43) Date de publication de la demande: 24.03.2010
(73) Titulaire: Integration Technique et Cablage (ITEC), 49480 Saint Sylvain d'Anjou (FR)
(72) Inventeur: Bachelot, Jacques, 49480 Saint Sylvain d'Anjou (FR)
(74) Mandataire: Maillet, Alain

(56) Documents cités:
- EP-A- 0 109 881
- EP-A- 1 881 574

## Description

La présente invention concerne un dispositif de répartition de puissance électrique comprenant au moins un pied de fixation ainsi qu'un tel pied de fixation.

On connaît un dispositif de répartition de puissance électrique pour une rangée d'appareils modulaires tels des disjoncteurs, des interrupteurs différentiels, etc. Le dispositif de répartition comprend un ensemble de barres d'alimentation disposées parallèlement entre elles et logées dans un boîtier. Le dispositif de répartition est alimenté électriquement par un câble d'alimentation électrique comprenant un conducteur supportant la phase et un conducteur supportant chaque phase électrique. A cette fin, le dispositif de répartition comprend pour chaque conducteur des moyens de raccordement destinés à permettre le raccordement dudit moyen de raccordement au conducteur correspondant.

Chaque barre d'alimentation est électriquement raccordée à un moyen de raccordement de manière à distribuer le long de cette barre, la phase ou le neutre correspondant. A cette fin, le boîtier est percé, pour chaque barre d'alimentation, d'une pluralité d'orifices permettant l'insertion et la fixation d'un conducteur de liaison, et ainsi la connexion électrique dudit conducteur de liaison à la barre d'alimentation considérée. Chaque conducteur de liaison est par ailleurs électriquement connecté à l'une des bornes de l'un des appareils modulaires.

Le dispositif de répartition de puissance est muni de pieds de fixation qui permettent sa fixation à un rail d'un coffret.

Dans le cas de dispositif de répartition de grande longueur, le nombre de conducteurs est très important, ce qui entraîne un fort encombrement du volume dans lequel se trouvent ces conducteurs et un aspect esthétique disgracieux.

Un objet de la présente invention est de proposer un dispositif de répartition de puissance électrique comprenant au moins un pied de fixation qui ne présente pas les inconvénients de l'art antérieur et qui en particulier permet une réduction de l'encombrement du volume dans lequel sont logés les conducteurs qui sont connectés au dispositif de répartition.

A cet effet, est proposé un dispositif de répartition de puissance électrique pour une rangée d'appareils modulaires présentant chacun des bornes à chacune desquelles est connecté un conducteur de liaison, la puissance électrique étant fournie par un câble d'alimentation électrique, le dispositif de répartition comprenant:
- un boîtier réalisé dans un matériau électriquement isolant et présentant une pluralité de rangées de répartition, chacune percée d'une pluralité d'orifices de connexion,
- pour chaque rangée de répartition, une barre d'alimentation disposée à l'intérieur du boîtier, réalisée dans un matériau électriquement conducteur et présentant en vis-à-vis de chaque orifice de connexion, des moyens de connexions destinés à permettre la connexion d'un conducteur de liaison,
- pour chaque rangée de répartition, des moyens de raccordement, électriquement connectés à la barre d'alimentation de ladite rangée de répartition, et destinés à permettre la connexion d'un conducteur du câble d'alimentation électrique, et
- au moins un pied de fixation fixé audit boîtier et destiné à permettre la fixation du dispositif de répartition sur un support, le ou au moins un des pieds de fixation comprenant un crochet élastique issu du corps du pied de fixation et formant passe-câbles.

Avantageusement, le crochet élastique délimite en coopération avec l'une des faces du corps, un espace intérieur et l'extrémité libre du crochet élastique est recourbée vers l'intérieur de l'espace ainsi délimité.

Avantageusement, au moins l'une des faces du corps présente des premiers moyens de solidarisation, et le boîtier comprend une glissière destinée à coopérer avec lesdits premiers moyens de solidarisation pour former une liaison glissière.

Avantageusement, au moins l'une des faces du corps présente des moyens de solidarisation destinés à coopérer avec deux ailes d'un rail pour former une liaison glissière.

Avantageusement, lesdits moyens de solidarisation sont constitués d'une rainure destinée à recevoir l'une des ailes et une fixation par pince formant ressort destinée à recevoir l'autre aile.

Avantageusement, au moins l'une des faces du corps présente un alésage débouchant dans un logement à l'intérieur du corps.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de face d'un dispositif de répartition de puissance électrique selon un premier mode de réalisation de l'invention,
la Fig. 2 est une vue d'un pied de fixation selon l'invention,
la Fig. 3 est une vue de côté du dispositif de répartition de puissance de la Fig. 1, et
la Fig. 4 est une vue de côté d'un dispositif de répartition de puissance selon un deuxième mode de réalisation de l'invention.

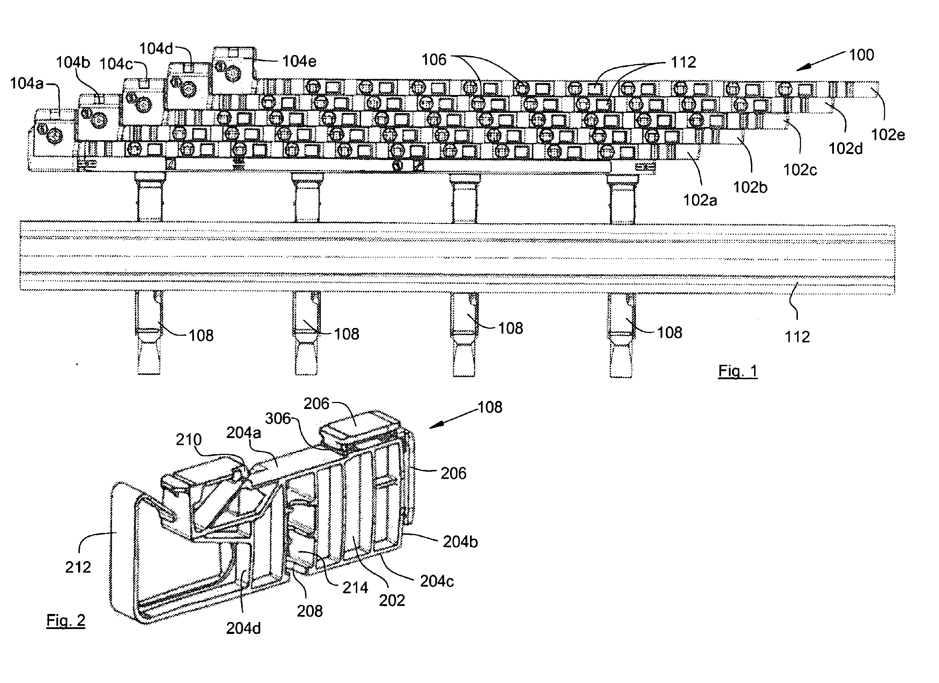

La Fig. 1 montre un dispositif de répartition de puissance électrique 100 pour une rangée d'appareils modulaires tels des disjoncteurs, des interrupteurs différentiels, etc. La puissance électrique est fournie à partir d'un câble d'alimentation électrique qui comprend classiquement un conducteur supportant chaque phase et au moins un conducteur supportant le neutre. Chaque appareil modulaire présente des bornes à chacune desquelles est connecté un conducteur de liaison.

Le dispositif de répartition 100 comprend:
- un boîtier 110 réalisé dans un matériau électriquement isolant et présentant une pluralité de rangées de répartition 102a à 102e, chacune percée d'une pluralité d'orifices de connexion 106,
- pour chaque rangée de répartition 102a-102e, une barre d'alimentation ou bus est disposé à l'intérieur du boîtier 110, réalisé dans un matériau électriquement conducteur et présentant en vis-à-vis de chaque orifice de connexion 106, des moyens de connexion destinés à permettre la connexion d'un conducteur de liaison,

- pour chaque rangée de répartition 102a-102e, des moyens de raccordement 104a-104e, électriquement connectés à la barre d'alimentation de ladite rangée de répartition 102a-102e, et destinés à permettre la connexion d'un conducteur du câble d'alimentation électrique, et
- au moins un pied de fixation 108 fixé audit boîtier 110 et destiné à permettre la fixation du dispositif de répartition 100 sur un support 112.

Dans le mode de réalisation de l'invention présenté sur la Fig. 1, les rangées 102a et 102b supportent le neutre et les rangées 102c, 102d et 102e supportent chacune une phase.

Les moyens de raccordement 104a-104e sont de préférence du type vis de serrage et les moyens de connexion sont de préférence du type moyens de connexion par pincement d'une lame ressort. Dans ce dernier cas, le boîtier 110 présente, pour chaque orifice de connexion 106, un orifice d'activation 112, dans lequel un technicien peut introduire un outil afin d'écarter la lame ressort et permettre l'introduction d'un conducteur de liaison.

En utilisation, le dispositif de répartition 100 est fixé à l'intérieur d'un coffret par l'intermédiaire de ses pieds de fixation 108. Cette fixation peut se faire directement sur l'une des parois constituant le coffret, ou par l'intermédiaire d'un rail 112 qui est lui-même fixé au coffret.

Dans le mode de réalisation de l'invention présenté sur la Fig. 1, le support 112 est un rail.

Les pieds de fixation 108 sont de préférence réalisés dans un matériau électriquement isolant.

La Fig. 2 montre en perspective un pied de fixation 108 selon l'invention. Le pied de fixation 108 est généralement une pièce moulée. Le pied de fixation 108 comprend un corps 202 de forme sensiblement parallélépipédique. Au moins l'une des faces 204a, 204b (deux dans le mode de réalisation de l'invention présenté sur la Fig. 2) du corps 202 présente des premiers moyens de solidarisation 206. Au moins l'une des faces 204c (une seule dans le mode de réalisation de l'invention présenté sur la Fig. 2) du corps 202 présente un alésage 208. Au moins l'une des faces 204a (une seule dans le mode de réalisation de l'invention présenté sur la Fig. 2) du corps 202 présente des deuxièmes moyens de solidarisation 206, 210.

Au moins l'une des faces 204d (une seule dans le mode de réalisation de l'invention présenté sur la Fig. 2) du corps 202 présente un crochet élastique 212 formant passe-câbles. La mise en place d'un passe-câbles 212 permet de regrouper les différents conducteurs et ainsi de réduire l'encombrement du volume intérieur du coffret. Le passe-câble 212 est constitué d'une patte élastique issue du corps 212 et qui en coopération avec l'une des faces 204d du corps 202 délimite l'espace intérieur du passe-câbles 212. L'extrémité libre de la patte est recourbée vers l'intérieur de l'espace ainsi délimité pour retenir les conducteurs dans ledit espace. En outre, la forme rentrante de l'extrémité libre facilite l'introduction des conducteurs dans le crochet élastique 212.

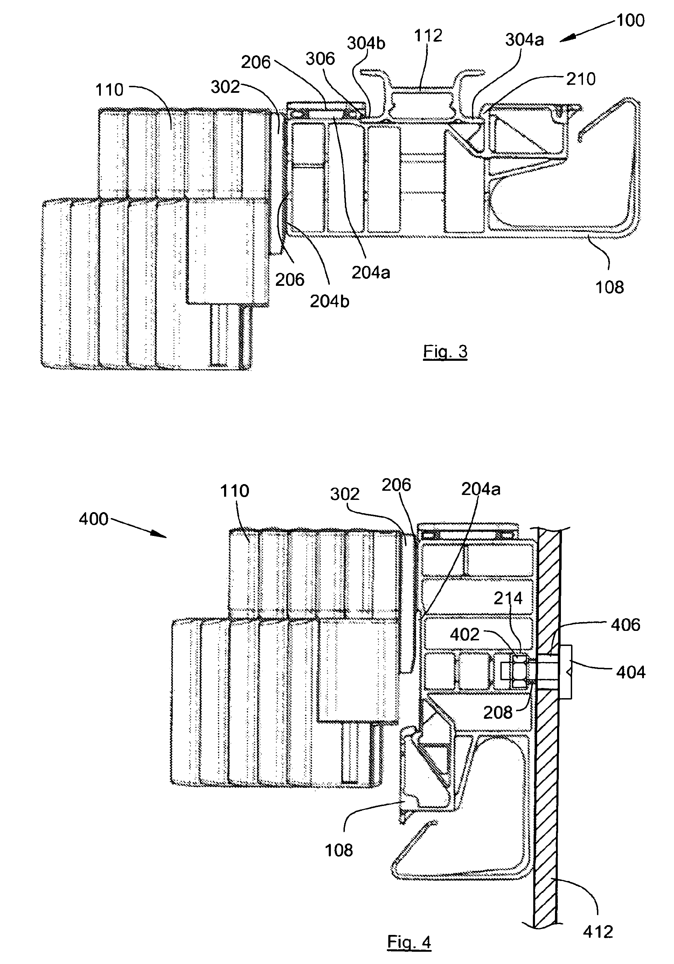

La Fig. 3 montre le dispositif de répartition 100 fixé sur le rail 112 et la Fig. 4 montre un dispositif de répartition 400 selon un autre mode de réalisation de l'invention et fixé sur une paroi 412 d'un coffret. La différence entre le dispositif de répartition 100 de la Fig. 3 et le dispositif de répartition 400 de la Fig. 4 réside dans le positionnement des pieds de fixation 108 par rapport au boîtier 110 et dans le mode de fixation du dispositif de répartition 100, 400 sur le support 112, 412.

Les premiers moyens de solidarisation 206 sont prévus pour permettre la solidarisation du pied de fixation 108 avec le boîtier 110. A cette fin, le boîtier 110 comprend une glissière 302 qui coopère avec les premiers moyens de solidarisation 206 pour former une liaison glissière. Par exemple, la glissière 302 présente une rainure à profil en T et les premiers moyens de solidarisation 206 prennent la forme d'une extension à profil en T prévue pour s'insérer dans ladite rainure en T.

Dans les modes de réalisation de l'invention représentés sur les Figs., le pied de fixation 108 comprend deux de ces premiers moyens de solidarisation 206 disposés sur deux faces 204a et 204b orthogonales l'une à l'autre, permettant de positionner chaque pied de fixation 108 selon deux orientations différentes.

Les deuxièmes moyens de solidarisation 206, 210 sont prévus pour permettre la solidarisation du pied de fixation 108 avec le rail 112. A cette fin, le rail 112 présente une âme comportant deux ailes 304a et 304b qui coopèrent avec les deuxièmes moyens de solidarisation 206, 210 pour former une liaison glissière. Dans le mode de réalisation de l'invention présenté sur la Fig. 3, les deuxièmes moyens de solidarisation sont constitués d'une rainure 306 que l'extension 206 comprend et qui est destinée à recevoir l'aile 304b et d'une fixation par pince formant ressort 210 destinée à recevoir l'aile 304a. L'une des ailes 304b s'insère dans la rainure 306 de l'extension 206 et l'autre aile 304a est maintenue par la fixation par pince formant ressort 210.

La fixation du pied de fixation 108 sur la paroi 412 est réalisée à l'aide d'un système vis-écrou 402, 404. L'alésage 208 traverse la paroi 204c du corps 202 et débouche dans un logement 214 à l'intérieur du corps 202. Le logement 214 est destiné à recevoir un écrou 404. La fixation du pied de fixation 108 sur la paroi 412 s'effectue par vissage d'une vis 404 dans l'écrou 402 à travers l'alésage 208 et un alésage 406 que la paroi 412 comprend.

Bien entendu, la présente invention n'est pas limitée aux exemples et modes de réalisation décrits et représentés, mais elle est susceptible de nombreuses variantes accessibles à l'homme de l'art.

## Revendications

1. Dispositif de répartition de puissance électrique (100) pour une rangée d'appareils modulaires présentant chacun des bornes à chacune desquelles est connecté un conducteur de liaison, la puissance électrique étant fournie par un câble d'alimentation électrique, le dispositif de répartition (100) comprenant:
- un boîtier (110) réalisé dans un matériau électriquement isolant et présentant une pluralité de rangées de répartition (120a-102e), chacune percée d'une pluralité d'orifices de connexion (106),
- pour chaque rangée de répartition (102a-102e), une barre d'alimentation disposée à l'intérieur du boîtier (110), réalisée dans un matériau électriquement conducteur et présentant en vis-à-vis de chaque orifice de connexion (106), des moyens de connexions destinés à permettre la connexion d'un conducteur de liaison,
- pour chaque rangée de répartition (102a-102e), des moyens de raccordement (104a-104e), électriquement connectés à la barre d'alimentation de ladite rangée de répartition (102a-102e), et destinés à permettre la connexion d'un conducteur du câble d'alimentation électrique, et
- au moins un pied de fixation (108) fixé audit boîtier (110) et destiné à permettre la fixation du dispositif de répartition (100) sur un support (112, 412), le ou au moins un des pieds de fixation (108) comprenant un crochet élastique (212) issu du corps (202) du pied de fixation (108) et formant passe-câbles.

2. Dispositif de répartition de puissance électrique (100) selon la revendication 1, **caractérisé en ce que** le crochet élastique (212) délimite en coopération avec l'une des faces (204d) du corps (202), un espace intérieur et **en ce que** l'extrémité libre du crochet élastique (212) est recourbée vers l'intérieur de l'espace ainsi délimité.

3. Dispositif de répartition de puissance électrique (100) selon l'une des revendications 1 ou 2, **caractérisé en ce que** au moins l'une des faces (204a, 204b) du corps (202) présente des premiers moyens de solidarisation (206), et **en ce que** le boîtier (110) comprend une glissière (302) destinée à coopérer avec lesdits premiers moyens de solidarisation (206) pour former une liaison glissière.

4. Dispositif de répartition de puissance électrique (100) selon l'une des revendications 1 à 3, **caractérisé en ce que** au moins l'une des faces (204a) du corps (202) présente des moyens de solidarisation (206, 210) destinés à coopérer avec deux ailes (304a, 304b) d'un rail (112) pour former une liaison glissière.

5. Dispositif de répartition de puissance électrique (100) selon la revendication 4, **caractérisé en ce que** lesdits moyens de solidarisation sont constitués d'une rainure (306) destinée à recevoir l'une des ailes (304b) et une fixation par pince formant ressort (210) destinée à recevoir l'autre aile (304a).

6. Dispositif de répartition de puissance électrique (100) selon l'une des revendications 1 à 5, **caractérisé en ce qu'**au moins l'une des faces (204c) du corps (202) présente un alésage (208) débouchant dans un logement (214) à l'intérieur du corps (202).

## Claims

1. Device (100) for distributing electrical power to a row of modular devices each having terminals to each of which a linking conductor is connected, the electrical power being supplied by an electrical power supply cable, the distributing device (100) comprising:
- a casing (110) which is produced from an electrically insulating material and which has a plurality of distributing rows (102a-102e), each having a plurality of connecting openings (106),
- for each distributing row (102a-102e), a busbar which is located inside the casing (110), is produced from an electrically conductive material and has, facing each connecting opening (106), connecting means which are to permit the connection of a linking conductor,
- for each distributing row (102a-102e), coupling means (104a-104e) which are connected electrically to the busbar of the said distributing row (102a-102e), and which are to permit the connection of a conductor of the electrical power supply cable, and
- at least one fastening foot (108) which is fastened to the said casing (110) and which is to permit the fastening of the distributing device (100) to a support (112, 412), the or at least one of the fastening feet (108) comprising a resilient hook (212) extending from the body (202) of the fastening foot (108) and forming a cable bushing.

2. Device (100) for distributing electrical power according to claim 1, **characterised in that**, in cooperation with one of the faces (204d) of the body (202), the resilient hook (212) delimits an internal space and **in that** the free end of the resilient hook (212) is bent towards the inside of the space so delimited.

3. Device (100) for distributing electrical power according to either claim 1 or claim 2, **characterised in that** at least one of the faces (204a, 204b) of the body (202) has first securing means (206), and **in that** the casing (110) comprises a slide (302) which is to cooperate with the said first securing means (206) to form a sliding link.

4. Device (100) for distributing electrical power according to any one of claims 1 to 3, **characterised in that** at least one of the faces (204a) of the body (202) has securing means (206, 210) which are to cooperate with two wings (304a, 304b) of a rail (112) to form a sliding link.

5. Device (100) for distributing electrical power according to claim 4, **characterised in that** the said securing means are formed by a groove (306) which is to receive one of the wings (304b) and by a spring-forming clip fastening (210) which is to receive the other wing (304a).

6. Device (100) for distributing electrical power according to any one of claims 1 to 5, **characterised in that** at least one of the faces (204c) of the body (202) has a
bore (208) leading into a housing (214) inside the body (202).

## Patentansprüche

1. Verteiler für elektrische Leistung (100) für eine Reihe von modularen Geräten, von denen jedes Klemmen aufweist, an denen jeweils ein Anschlussleiter angeschlossen ist, wobei die elektrische Leistung durch ein elektrisches Versorgungskabel bereitgestellt wird, wobei der Verteiler (100) aufweist:
- ein Gehäuse (110) aus einem elektrisch isolierenden Material und mit mehreren Aufteilungsreihen (102a-102e), von denen jede von mehreren Verbindungsöffnungen (106) durchbohrt ist,
- für jede Aufteilungsreihe (102a-102e) eine Versorgungsschiene, die im Inneren des Gehäuses (110) angeordnet ist, aus einem elektrisch leitenden Material besteht und gegenüber jedem Verbindungsloch (106) Anschlussmittel aufweist, die zum Anschluss eines Anschlussleiters dienen,
- für jede Aufteilungsreihe (102a-102e) Verbindungsmittel (104a-104e), die mit der Versorgungsleiste der jeweiligen Aufteilungsreihe (102a-102e) elektrisch verbunden sind und zum Anschluss eines Leiters eines elektrischen Versorgungskabels dienen, und
- mindestens einem Befestigungsfuß (108), der an dem Gehäuse (110) befestigt ist und zur Befestigung des Verteilers (100) an einem Träger (112, 412) vorgesehen ist, wobei der oder mindestens einer der Befestigungsfüße (108) einen elastischen Haken (212) aufweist, der vom Körper (202) des Befestigungsfußes (108) abragt und Kabeleinführungen bildet.

2. Verteiler für elektrische Leistung (100) gemäß Anspruch 1,
**dadurch gekennzeichnet, dass**
der elastische Haken (212) zusammen mit einer der Flächen (204d) des Körpers (202) einen inneren Raum begrenzt und das freie Ende des elastischen Hakens (212) ins Innere des auf diese Weise begrenzten Raumes umgebogen ist.

3. Verteiler für elektrische Leistung (100) gemäß einem der Ansprüche 1 oder 2,
**dadurch gekennzeichnet, dass**
mindestens eine der Flächen (204a, 204b) des Körpers (202) erste Befestigungsmittel (206) aufweist und das Gehäuse (110) eine Führungsschiene (302) umfasst, die mit den ersten Verbindungsmitteln (206) zusammenwirkt, um eine Gleitverbindung zu bilden.

4. Verteiler für elektrische Leistung (100) gemäß einem der Ansprüche 1 bis 3,
**dadurch gekennzeichnet, dass**
mindestens eine der Flächen (204a) des Körpers (202) Befestigungsmittel (206, 210) aufweist, die mit zwei Flügeln (304a, 304b) einer Schiene (112) zusammenwirken, um eine Gleitverbindung zu bilden.

5. Verteiler für elektrische Leistung (100) gemäß Anspruch 4,
**dadurch gekennzeichnet, dass**
die Befestigungsmittel aus einer Nut (306) zum Aufnehmen eines der Flügel (304b) und aus einer eine Feder bildende Klemmbefestigung (210) zum Aufnehmen des anderen Flügels (304a) gebildet werden.

6. Verteiler für elektrische Leistung (100) gemäß einem der Ansprüche 1 bis 5,
**dadurch gekennzeichnet, dass**
mindestens eine der Flächen (204c) des Körpers (202) eine Bohrung (208) aufweist, die in einem Aufnahmeraum (214) im Inneren des Körpers (202) endet.
